# EUROPÄISCHE PATENTANMELDUNG

(11) **EP 0 591 100 A1**
(43) Veröffentlichungstag der Anmeldung: **06.04.1994**
(21) Anmeldenummer: 93810639.0
(22) Anmeldetag: 09.09.1993
(51) Int. Cl.: B62D 27/06, B61D 3/08

(54) **Rungenhalterung**

(30) Priorität: 29.09.1992 CH 3037/92
(71) Anmelder: ALUSUISSE-LONZA SERVICES Ltd., CH-8034 Zürich (CH)
(72) Erfinder: Hrasche, Heinrich, CH-8953 Dietikon (CH)

(57) **Zusammenfassung**

Rungenhalterung (10,11) für Pritschenrahmen, beispielsweise von Lastkraftwaren. Die Rungenhalterung enthält eine Rungentasche und wenigstens eine Keiltasche (10), wobei die Rungentasche (11) und die Keiltasche (10) unabhängige Bauteile darstellen. Die Keiltasche (10) ist ein Formstück, beispielsweise aus Stahl oder Aluminium, und enthält an wenigstens einer Seitenfläche eine keilförmige Ausnehmung (13), die sich vom oberen Ende des Formstückes gegen das untere Ende des Formstückes erstreckt und sich von oben nach unten einengt.

## Beschreibung

Vorliegende Erfindung betrifft eine Rungenhalterung enthaltend eine Rungentasche und wenigstens eine Keiltasche.

Rungenhalterungen können an Transportmitteln, wie Eisenbahnwagen und insbesondere Lastkraftwagen oder Anhängern oder Aufliegern für Lastkraftwagen randständig der Ladefläche, wie Pritsche oder Brücke, angebracht sein und dienen zur lösbaren Befestigung von Rungen, die ihrerseits die Ladung gegen Herabfallen oder Verrutschen schützen oder das wirtschaftliche Beladen der Ladefläche erst ermöglichen.

Beispielsweise an den Ladeflächen von Lastkraftwagen sind sogenannte Bordwände angebracht, die in der Regel klappbar gestaltet sind und welche die Ladung vor dem Herabfallen hindern.

Die Bordwände weisen insbesondere bei relativ grossen Ladebrücken eine oftmals ungenügende Stabilität auf, so dass die Bordwände ihrerseits durch Rungen abgestützt werden müssen, oder die Rungen dienen in Abwesenheit einer Bordwand als Schutzmassnahme für die Ladegüter.

Zum Entladen müssen die Rungen umklappbar und/oder ganz entfernbar sein. Zu diesem Zweck ist jede Runge vorteilhaft in einer Rungenhalterung gelagert, wobei die Runge am unteren Ende einen Drehpunkt aufweisen kann, worin die Runge drehbar und vorteilhaft auch entfernbar gelagert ist.

Zur Fixierung der Runge in Transportstellung, d.h. in der Regel in senkrechter Stellung, können Befestigungsmittel vorgesehen werden. Solche Befestigungsmittel können Keile sein, welche von oben in eine Keiltasche, die ihrerseits ein konstruktives Element der Rungenhalterung darstellt, eingeführt werden. Die Keile können gegenüber der Runge verspannt werden und halten die Runge in der vorgesehenen Stellung.

Bis anhin wurden solche Rungenhalterungen in Stahlblech ausgeführt und stellen beispielsweise ein Stahlblech dar mit zwei sich nach oben erstreckenden Schenkeln, die in ihrer oberen Hälfte nach schräg oben und aussen abragen und einer am unteren Ende befindlichen, über die ganze Breite eine Tasche bildende Auskragung. Diese Auskragung stellt die Rungentasche dar. Die Rungenhalterung kann an der vorgesehenen Stelle, am Pritschenrahmen durch Schweissen festgelegt werden. Zwischen den abragenden Schenkeln und dem Pritschenrahmen können mittig der Schenkel zur Verstärkung Distanzstücke durch Lochschweissung angebracht sein. Die abragenden Schenkel bilden mit dem Pritschenrahmen eine Keiltasche.

Derartige Rungenhalterungen aus Stahl können beispielsweise an Stahl-Pritschenrahmen durch Schweissen festgelegt werden. Zur Gewichts- und Energieersparnis werden heute solche Pritschenrahmen, wie andere Bauelemente von z.B. Lastkraftwagen, in Aluminium ausgeführt. Eine Schweissverbindung ist zwischen Stahl und Aluminium nicht möglich.

Es drängen sich in solchen Fällen Schraubverbindungen auf. Die Herstellung einer Rungentasche, wie beschrieben, ist aufwendig und im Falle einer Abnützung durch den Gebrauch oder durch Überbelastung muss die ganze Rungenhalterung ausgetauscht werden, was insbesondere bei Schweissverbindungen sehr aufwendig ist.

Aufgabe vorliegender Erfindung ist es, die genannten Nachteile zu vermeiden und eine Rungenhalterung zu schaffen, die an verschiedenen Materialien festlegbar ist und die im Bedarfsfalle leicht ausgetauscht werden kann.

Erfindungsgemäss wird dies dadurch erreicht, dass die Rungentasche und wenigstens eine Keiltasche unabhängige Bauteile darstellen und die Keiltasche ein Formstück ist, enthaltend an wenigstens einer Seitenfläche eine keilförmige Ausnehmung, die sich vom oberen Ende des Formstückes gegen das untere Ende des Formstückes erstreckt und sich von oben nach unten einengt, und das Formstück am unteren Ende eine Anschlagfläche bildet.

Die Rungentasche stellt ein unabhängiges Bauteil dar und ist im wesentlichen eine Grundplatte, welche am unteren Ende eine waagrecht verlaufende, taschenförmige Abkragung aufweist. Zweckmässig hat die Abkragung einen halbrunden Querschnitt. In diese Abkragung kann ein Bolzen eingreifen. Der Bolzen seinerseits kann sich über die ganze Breite der Runge erstrecken und an den unteren Enden der Seitenflächen der Runge befestigt sein. Dadurch ist die Runge, abgestützt über den Bolzen, in der Rungentasche drehbar gelagert.

Nach vorliegender Erfindung kann die Rungentasche z.B. an einem Pritschenrahmen trennfest über Schweiss- oder bevorzugt Schraubverbindungen befestigt werden.

Zu jeder Rungentasche können wenigstens eine, zweckmässig zwei, Keiltaschen vorgesehen werden. Die Rungentasche und die Keiltasche oder Keiltaschen sind unabhängige Bauteile, die für sich montiert und demontiert werden können.

Die Keiltaschen können an einem Pritschenrahmen trennfest über Schweiss- oder bevorzugt Schraubverbindungen befestigt werden.

Die Keiltasche stellt ein Formstück dar, beispielsweise aus Metall, wie Stahl, Eisen, Aluminium usw. und kann ein Guss- oder Schmiedeteil sein.

Das Formstück weist einen Boden, eine Deckfläche, zwei Seitenflächen und eine obere und eine untere Stirnfläche auf.

An wenigstens einer Seitenfläche und bevorzugt an beiden Seitenflächen können keilförmige Ausnehmungen angebracht sein.

Die keilförmigen Ausnehmungen dienen zur Aufnahme von Keilen, welche Teile einer Verspannungsvorrichtung in der Runge bilden. Mit den Keilen wird die Runge in Transportstellung fixiert und gegen Umklappen oder Abfallen gesichert. Die keilförmigen Ausnehmungen bilden Führungsflächen für die Keile.

Die Ausnehmungen können sich von oben durch das ganze Formstück hindurch erstrecken oder können sich von oben nur über einen Teil des Formstückes erstrecken. Die dem Boden des Formstückes zugewandte Seite der keilförmigen Ausnehmung ist bevorzugt parallel zum Boden, während die der Deckfläche zugewandte Seite der keilförmigen Ausnehmung von oben verengend schräg nach unten verläuft.

Bevorzugt weisen Rungentasche und Keiltasche flächenhafte Berührungsstellen auf, an denen sich die Bauteile formschlüssig berühren. Dies betrifft insbesondere die obere Begrenzung der Rungentasche und eine untere Anschlagfläche des Formstückes. Beispielsweise kann die untere Anschlagfläche des Formstückes ein Teil der unteren Stirnfläche oder eine Hinterschneidung an der unteren Stirnfläche darstellen.

Die untere Stirnfläche kann auch teilweise als Anschlagfläche für den Rungenkörper dienen. Der Rungenkörper kann eine Ausnehmung, beispielsweise eine rechteckförmige Ausnehmung, aufweisen, dessen unterer Abschluss in Transportstellung der Runge in unmittelbarer Nähe der unteren Stirnfläche des Formkörpers zu liegen kommt. Werden die Keile durch die Spannvorrichtung in die keilförmigen Ausnehmungen gedrückt, wird der Rungenkörper durch nach oben wirkende Kräfte beaufschlagt. Eine Bewegung nach oben wird durch die Berührung des Rungenkörpers mit der Anschlagfläche des Formstückes verhindert. Dadurch tritt eine Verspannung und damit Festlegung der Runge ein.

Im weiteren kann das Formstück Ausnehmungen aufweisen. Diese Ausnehmungen dienen zur Aufnahme von lösbaren Befestigungsmitteln, wie z. B. Schrauben, Nieten, gegebenenfalls Klemmteile oder dergleichen. Die Ausnehmungen stellen bevorzugt Bohrungen zur Aufnahme von Schrauben dar. Die Ausnehmungen laufen insbesondere parallel zu den Seitenflächen und senkrecht zur Bodenfläche.

Vorliegende Erfindung wird beispielhaft anhand der Figuren 1 bis 5 näher erläutert.

Figur 1 zeigt eine Draufsicht auf eine Rungenhalterung nach vorliegender Erfindung.

Figur 2 zeigt eine perspektivische Ansicht einer Keiltasche.

Figur 3 zeigt eine perspektivische Ansicht einer Keiltasche in anderer Ausführungsform.

Figur 4a zeigt die Draufsicht auf die Keiltasche gemäss Figur 2, 4b eine Ansicht von oben und 4c eine Seitenansicht der Keiltasche und daran anschliessend die Rungentasche.

Figur 5 zeigt eine perspektivische Ansicht einer weiteren Ausführungsform der Keiltasche mit einem einfachen T-Profil.

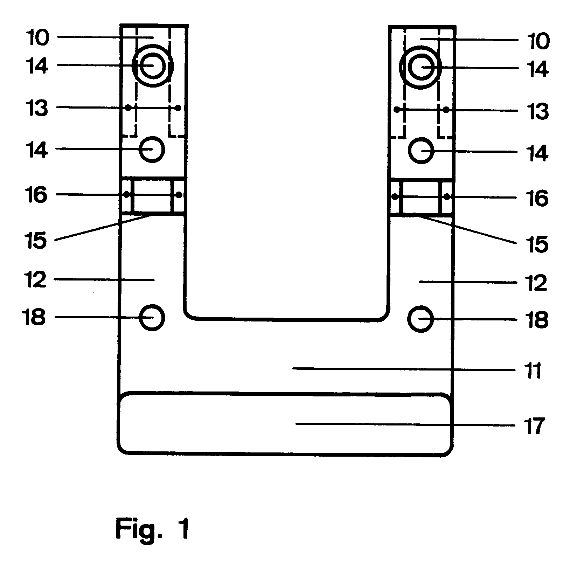

In Figur 1 sind zwei Keiltaschen 10 gezeigt, die über den Schenkeln 12 der Rungentasche 11 angeordnet sind. An den Keiltaschen 10 sind die keilförmigen Ausnehmungen 13 angedeutet. In diese keilförmigen Ausnehmungen greifen Keile des Rungenmechanismus ein (nicht gezeichnet). Die Materialstärke zwischen den beiden Ausnehmungen 13 kann beispielsweise 8 bis 12 mm und insbesondere 9 mm betragen. Die Materialstärke richtet sich insbesondere nach den Vorgaben durch die Keile in den Rungen und kann deshalb auch von den angegebenen Masszahlen variieren.

Die Keiltaschen können beispielsweise je zwei Bohrungen 14 aufweisen, durch welche die Verbindungselemente zum Befestigen der Keiltaschen am Pritschenrahmen durchgeführt werden können. Die Verbindungselemente sind vorteilhaft Schrauben. Die Bohrungen 14 und dabei insbesondere die oberen Bohrungen können angesenkt sein. Damit wird erreicht, dass die Schraubenköpfe nicht über das Profil der Keiltaschen hinausragen.

Die Keiltaschen weisen eine Anschlagfläche 15 auf. Gegen diese Anschlagfläche 15 wird die Runge gespannt. Die Runge weist für jede Keiltasche eine Ausnehmung auf, deren untere Kante nach dem Verspannen gegen die Anschlagfläche 15 stösst. Die Runge weist auch einen Mechanismus mit verschiebbaren Keilen auf, wobei die Keile in die keilförmigen Ausnehmungen 13 geführt werden. Durch Absenken der Keile in die Keiltasche, beispielsweise mit Hilfe eines Hebelmechanismus, wird die Unterkante der Ausnehmung an der Runge gegen die Anschlagfläche 15 gedrückt und die Runge somit verspannt und verdrehsicher gehalten.

Da auf die Anschlagfläche 15 starke Kräfte einwirken, können Verstärkungsrippen 16 vorgesehen werden.

Die Rungentasche 11 weist eine taschenförmige Auskragung 17 auf, welche beispielsweise einen Bolzen, der quer am unteren Rand der Runge angebracht ist, drehbar aufnimmt. Die Rungentasche 11 weist beispielhaft Bohrungen 18 auf, über welche die Rungentasche z. B. mittels Schrauben ebenfalls am Rahmen der Ladepritsche befestigt werden kann.

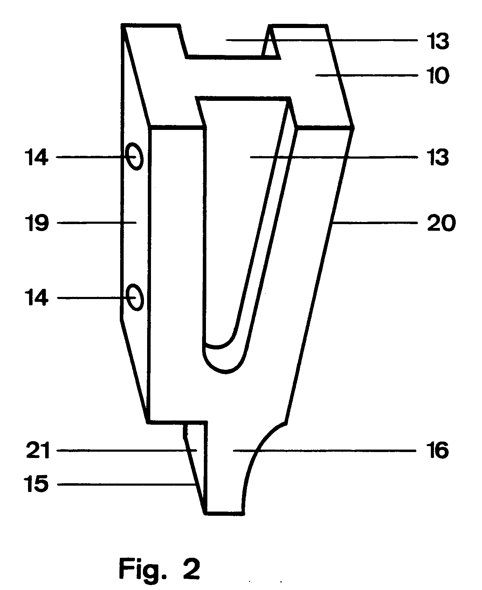

Figur 2 zeigt die perspektivische Ansicht einer Keiltasche. Es sind die keilförmigen Ausnehmungen 13 erkennbar. Am Boden 19 sind die Bohrungen 14 zu erkennen, welche durchgehend bis zur Deckfläche 20 sind und im Material zwischen den keilförmigen Ausnehmungen 13 untergebracht sind.

Verstärkungsrippen 16 sind gegen die Anschlagfläche 15 gerichtet. Unter einer Aussparung 21, welche mit dem Pritschenrahmen eine Nut bildet, kann ein Schenkel der Rungentasche geschoben werden. Dadurch wird die Masshaltigkeit von Rungentasche und Keiltasche gegenüber der Runge und dem Keilmechanismus erleichtert.

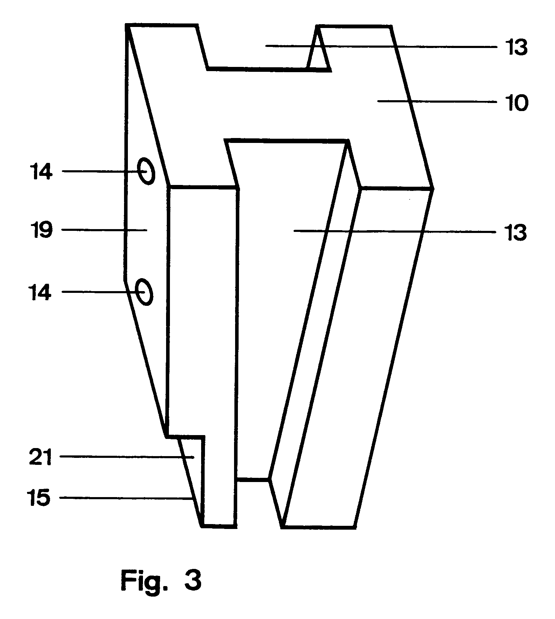

Figur 3 zeigt eine andere Ausführungsform einer Keiltasche 10. Die keilförmige Ausnehmung 13 wird durch ein Doppel-T-Profil begrenzt. Der Boden 19 der Keiltasche 10 kann wiederum an der Aussparung 21 enden. Die Anschlagfläche für die Runge ist mit 15 bezeichnet. Ferner sind die Bohrungen 14 eingezeichnet. Die Dicke des Steges des Doppel-T-Profils kann beispielsweise 8 bis 12 mm und insbesondere 9 mm betragen.

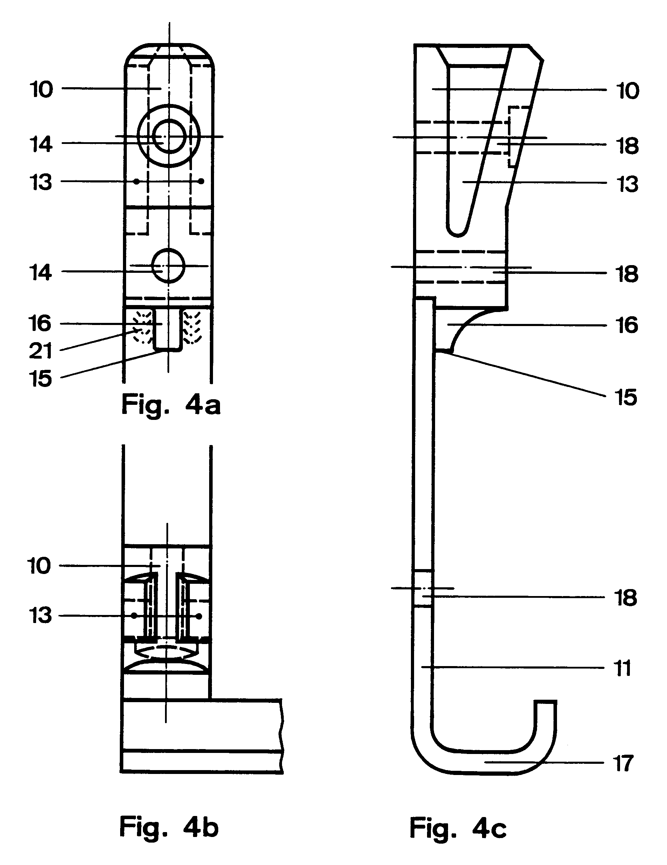

Figur 4a stellt die Draufsicht auf eine Keiltasche 10 dar. Die Ausnehmungen 13 sind angedeutet und erkennbar sind die Bohrungen 14, die Verstärkungsrippe 16 und die Anschlagfläche 15 am unteren Ende der Keiltasche. Die Ausführung der Verstärkungsrippe 16 stellt eine Variante dar. Eine Ausführungsform mit zwei randständigen Verstärkungsrippen 16 ist z.B. in Figur 1 dargestellt.

Figur 4b stellt die Ansicht der Keiltasche 10 von oben dar und sinngemäss sind die keilförmigen Ausnehmungen 13 eingezeichnet.

Figur 4c zeigt die Rungenhalterung aus Keiltasche 10 und Rungentasche 11. Die Rungentasche 11 weist an ihrem unteren Ende die taschenförmige Auskragung 17 und an geeigneter Stelle die Bohrungen 18 auf. Die Schenkel der Rungentasche greifen in die Nut, welche durch den Pritschenrahmen (nicht gezeichnet), und die Aussparung 21 in der Keiltasche 10, gebildet wird. Gegen die Anschlagfläche 15 kann sich die untere Begrenzung einer Ausnehmung in der Runge (nicht gezeichnet) abstützen. Die Keiltasche 10 weist wiederum die keilförmigen Ausnehmungen 13 auf.

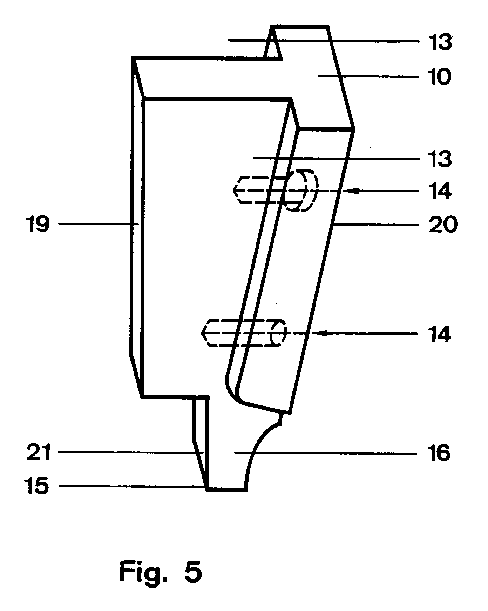

Figur 5 zeigt eine weitere beispielhafte Ausführungsform einer Keiltasche 10. Die keilförmige Ausnehmung 13 wird durch ein einfaches T-Profil begrenzt. Der senkrechte Steg des T-Profils kann beispielsweise eine Dicke von 8 bis 12 mm und insbesondere 9 mm aufweisen. Durch den Wegfall des Doppel-T-Profils wird der Boden 19 der Keiltasche 10 relativ schmal. Beidseits des Bodens, entlang dem T-Profil, können auch Schweissnähte gelegt werden. Die Verdickungen, welche durch die Schweissnähte entstehen, stören bezüglich der Breite der rechteckförmigen Ausnehmungen der Rungen nicht, da die Schweissnähte noch nicht über die Breite dieser Rungenausnehmungen ragen.

Die Keiltasche 10 ist über die Bodenfläche 19 am Pritschenrahmen festgelegt und Pritschenrahmen und Firststreifen des T-Profils bilden die Ausnehmung 13, die sich von oben einseitig schräg einwärts nach unten verengt.

Der Boden 19 der Keiltasche 10 endet an der Aussparung 21, welche mit dem Pritschenrahmen eine Nut bildet, in welche einer der Schenkel der Rungentasche geschoben werden kann.

Eine Verstärkungsrippe 16 bildet an ihrem unteren Ende die Anschlagfläche 15.

Auf der Deckfläche 20 können beispielsweise zwei Sacklöcher vorgesehen werden, die fallweise, bei einer Montage, aufgebohrt und als Schraubenlöcher gebraucht werden können. In der Figur 5 sind die Sacklöcher durch die unterbrochenen Striche 14 angedeutet. Die Ausführungsform gemäss Figur 5 kann sowohl an den Pritschenrahmen geschraubt, geschweisst oder geschraubt und geschweisst werden. Auch eine Punktschweissung zwischen Verstärkungsrippen 16 und Rungentasche (nicht eingezeichnet) z.B. im Bereich der Anschlagfläche 15 ist möglich. Die Bohrungen oder Sacklöcher auf der Deckfläche 20 können angesenkt sein.

In einer möglichen Ausführungsform weist eine Keiltasche nur einseitig eine keilförmige Ausnehmung auf. Entsprechend ist in vereinfachender Weise auch nur ein Keil vorzusehen. Eine solche Ausführungsform kann für geringere Belastungen der Runge vorgesehen werden.

Die Rungen- und Keiltaschen stellen Formteile dar, zweckmässig aus Metall wie Stahl, Eisen, Aluminium oder Aluminiumlegierungen, der Materialabnutzung wegen vorzugsweise aus Stahl, und können Guss- oder Schmiedeteile sein, wobei die Rungen- und Keiltaschen nicht aus demselben Material gefertigt sein müssen.

Die Montage der Rungen- und Keiltaschen an beispielsweise einem Rahmen der Ladepritsche erfolgt zweckmässigerweise durch Schrauben, Nieten, gegebenenfalls durch Klemmen oder Verkeilen. Für den Fall, in dem die Rungenhalterung und die Träger der Ladepritsche aus demselben Material bestehen, gegebenenfalls auch durch Schweissen. Zur Schweiss- und/oder Niet- resp. Schraubverbindung eignen sich insbesondere Keiltaschen gemäss Figur 5, deren Boden sehr schmal ist und die Schweissnähte beidseitig des Bodens nicht stören.

## Patentansprüche

1. Rungenhalterung enthaltend eine Rungentasche und wenigstens eine Keiltasche, dadurch gekennzeichnet, dass die Rungentasche und wenigstens eine Keiltasche unabhängige Bauteile darstellen und die Keiltasche ein Formstück ist, enthaltend an wenigstens einer Seitenfläche eine keilförmige Ausnehmung, die sich vom oberen Ende des Formstückes gegen das untere Ende des Formstückes erstreckt und sich von oben nach unten einengt.

2. Rungenhalterung nach Anspruch 1, dadurch gekennzeichnet, dass diese eine Rungentasche und zwei Keiltaschen enthält.

3. Rungenhalterung nach Anspruch 1, dadurch gekennzeichnet, dass das Formstück an jeder Seitenfläche eine keilförmige Ausnehmung aufweist.

4. Rungenhalterung nach Anspruch 1, dadurch gekennzeichnet, dass das Formstück eine untere Anschlagfläche aufweist, die formschlüssig an die Rungentasche anschliesst.

5. Rungenhalterung nach Anspruch 1, dadurch gekennzeichnet, dass das Formstück eine untere Anschlagfläche aufweist, an welcher der Rungenkörper aufliegt.

6. Rungenhalterung nach Anspruch 1, dadurch gekennzeichnet, dass das Formstück Ausnehmungen zur Aufnahme von lösbaren Befestigungsmitteln aufweist und die Ausnehmungen parallel zu den Seitenflächen und senkrecht zur Bodenfläche angeordnet sind.

7. Rungenhalterung nach Anspruch 1, dadurch gekennzeichnet, dass die Rungentaschen am Pritschenrahmen mittels Schraubverbindungen befestigt sind.

8. Rungenhalterung nach Anspruch 1, dadurch gekennzeichnet, dass die Keiltasche am Pritschenrahmen mittels Schraubverbindungen befestigt sind.
